# EUROPEAN PATENT APPLICATION

(11) **EP 4 701 339 A1**
(43) Date of publication of application: **25.02.2026**
(21) Application number: 24868662.8
(22) Date of filing: 13.09.2024
(51) Int. Cl.: H05B 6/12, H05B 6/06, F24C 7/08, F24C 15/10, H02M 1/00, H02M 1/08, F24C 15/34

(54) **HOME APPLIANCE**

(30) Priority: 21.09.2023 KR 20230126657; 21.09.2023 KR 20230126658; 26.09.2023 KR 20230129155; 22.02.2024 KR 20240026117; 13.08.2024 KR 20240108515
(71) Applicant: LG Electronics Inc., Yeongdeungpo-gu Seoul 07336 (KR)
(72) Inventor: MOON, Hyunwook, Seoul 08592 (KR); KIM, Eui Sung, Seoul 08592 (KR); PARK, Kyungho, Seoul 08592 (KR); LEE, Yongsoo, Seoul 08592 (KR)
(74) Representative: Vossius & Partner Patentanwälte Rechtsanwälte mbB
(86) International application number: PCT/KR2024/014086
(87) International publication number: WO 2025/063685

(57) **Abstract**

The present invention provides a home appliance in which the output of a harmonic drive inverter can be precisely measured on the basis of a resonance parameter. The home appliance includes: a load circuit including at least one heating coil; an inverter circuit that includes switching elements and supplies a current to the load circuit according to switching operations of the switching elements; a current sensing circuit for sensing a resonance current output from the inverter circuit; a pulse generation circuit for generating a pulse signal used to measure the phase difference between the resonance current and a switching voltage of the inverter circuit on the basis of the resonance current; and a controller which measures the phase difference on the basis of the pulse signal and measures the output power of the load circuit on the basis of the phase difference.

## Description

### TECHNICAL FIELD

The present disclosure relates to a home appliance, and more particularly, to a home appliance including an induction heating cooktop.

### BACKGROUND ART

Recently, an induction range using induction heating technology is attracting attention as a next-generation cooking appliance that may replace a gas range due to advantages such as high heating efficiency, fast heating speed, stability, convenience, etc.

An induction heating cooktop product includes an induction heating cooktop having a heating coil composed of a ritz wire. When an induction-compatible container is located at a predetermined burner position, the container is heated. This scheme has a disadvantage in that the container should be placed only at a predetermined position, and has a disadvantage in that heating efficiency decreases when the position of the container is slightly incorrect.

Accordingly, all-free induction heating technology is being developed. This is a technology capable of heating the induction-compatible container even when the induction-compatible container is positioned not only at a predetermined area of an induction heating top plate but also at various positions thereof, and has the advantage that various sized containers and a multiple-compartment container having three or more compartments may also be heated.

There are various methods of measuring an output in an induction heating system. However, precisely measuring an output of an individual inverter is an important factor for controlling the system or controlling interference noise. In a shunt-based output measuring scheme as a conventional output measuring scheme, tuning is performed for a lot of time, and there is a problem in that a new tuning is required when a measurement target pattern of the inverter PCB is changed or the coil is changed.

In particular, in a harmonic-driven inverter, noise is generated a lot. Thus, measuring a small voltage in a shunt manner has a high possibility of generating an error of measuring an output in hardware.

In the prior art 1(EP4210438), output power is adjusted based on a phase difference. However, a plurality of comparators and a plurality of reference voltages are used, such that there is a disadvantage in that an error occurs at a time point near a time point of a low current and a low voltage. In particular, in the high-frequency driving inverter, a transition section has a large ratio compared to an entire phase margin section, so that the discrimination power of the phase margin data is deteriorated.

### SUMMARY OF DISCLOSURE

### TECHNICAL PURPOSE

A purpose of the present disclosure is to provide a home appliance capable of precisely measuring an output of a harmonic-driven inverter.

In addition, a purpose of the present disclosure is to provide a home appliance capable of detecting only a resonant current output from an inverter circuit and measuring a phase difference between the resonant current and a switching voltage of an inverter circuit.

In addition, a purpose of the present disclosure is to provide a home appliance capable of reducing an cumulative error occurring in a comparator by using only one comparator of a pulse generation circuit used to measure a phase difference.

In addition, a purpose of the present disclosure is to provide a home appliance capable of accurately measuring a phase difference based on a pulse signal according to a resonant current and a start time point of a switching frequency.

In addition, a purpose of the present disclosure is to provide a home appliance capable of measuring a resonant voltage based on an input voltage and a duty ratio of an inverter circuit.

In addition, a purpose of the present disclosure is to provide a home appliance capable of accurately measuring output power of a load based on a resonant current, a resonant voltage, and a phase difference.

In addition, a purpose of the present disclosure is to provide a home appliance capable of adjusting at least one of a switching frequency and a duty ratio of an inverter circuit according to output power of the load to drive the load with a target power.

The purposes to be solved according to an embodiment of the present specification are not limited to the above-mentioned purposes, and other purposes not mentioned will be clearly understood by those skilled in the art from the following description.

### TECHNICAL SOLUTION

The home appliance according to an embodiment of the present disclosure precisely measures the output of the harmonic-driven inverter.

Specifically, the home appliance generates a pulse signal based on the resonant current output from the inverter circuit, measures a phase difference based on the pulse signal, and measures output power of the load circuit based on the phase difference.

The home appliance according to an embodiment of the present disclosure detects only the resonant current output from the inverter circuit and measures the phase difference between the resonant current and the switching voltage of the inverter circuit.

Specifically, the home appliance defines an internal PWM count start time as a phase margin start time point, defines a falling edge interrupt of a pulse signal as a phase margin end time point, and calculates a phase difference based on the phase margin start and end time points.

The home appliance according to an embodiment of the present disclosure may reduce a cumulative error occurring in the comparator.

Specifically, the home appliance includes only one comparator that compares a voltage based on a resonant current with a reference voltage in a pulse generation circuit used to measure a phase difference and generate a pulse signal.

The home appliance according to an embodiment of the present disclosure measures a phase difference based on a pulse signal according to a resonant current and a start time point of a switching frequency.

Specifically, the home appliance defines a count start time point of the switching frequency as a phase margin start time point, defines a falling edge interrupt of the pulse signal as a phase margin end time point, and calculates a phase difference based on the phase margin start and end time points.

A home appliance according to an embodiment of the present disclosure measures a resonant voltage based on an input voltage and a duty ratio of an inverter circuit.

Specifically, the home appliance multiplies the input voltage of the inverter circuit by the duty ratio to calculate the resonant voltage.

Moreover, the home appliance measures the output power of the load based on the resonant current, the resonant voltage, and the phase difference.

Furthermore, the home appliance controls at least one of the switching frequency and the duty ratio of the inverter circuit according to the measured output power of the load to drive the load with a target power.

### TECHNICAL EFFECT

As described above, the home appliance of the present disclosure senses only the resonant current output from the inverter circuit and measures the phase difference between the resonant current and the switching voltage of the inverter circuit, and thus the output of the harmonic-driven inverter may be precisely measured.

In addition, the home appliance of the present disclosure measures the phase difference using only one comparator of the pulse generation circuit, thereby reducing the cumulative error occurring in the comparator.

In addition, the home appliance of the present disclosure may accurately measure the phase difference between the resonant current and the switching voltage of the inverter circuit based on the pulse signal according to the resonant current and the start time point of the switching frequency.

In addition, the home appliance of the present disclosure may measure the resonant voltage based on the input voltage from a power supply and the duty ratio of the inverter circuit.

In addition, the home appliance of the present disclosure may accurately measure the output power of the load based on the resonant current, the resonant voltage, and the phase difference.

In addition, the home appliance of the present disclosure may adjust at least one of the switching frequency and the duty ratio of the inverter circuit according to the output power of the load to drive the load with a target power.

In addition, the home appliance of the present disclosure detects only the resonant current in a hardware manner and measures the resonant voltage and the phase in a software manner to measure the output power of the load, thereby being robust to the noise compared to the home appliance employing the existing scheme using a shunt resistor.

In addition, the home appliance of the present disclosure detects only the resonant current in a hardware manner and measure the resonant voltage and the phase in a software manner to measure the output power of the load, thereby accurately measuring the power of the load regardless of the change of the heating coil or the change of the inverter PCB pattern.

In addition, the home appliance of the present disclosure adjusts at least one of the switching frequency and the duty ratio of the inverter circuit based on the measured power of the load, thereby improving the reliability of the switch operation of the inverter circuit.

In addition, the home appliance of the present disclosure measures the power of the load using the resonant current obtained via the current conversion of the current to be supplied from the inverter circuit to the load, thereby preventing the influence of the noise of the resistance of the ground voltage terminal.

In addition, the home appliance of the present disclosure may reduce the influence of noise, compared to the existing scheme of measuring the input current using the shunt resistor, thereby improving the reliability of high frequency operation of switching elements of the inverter circuit.

In addition, the home appliance of the present disclosure may accurately measure the power of the load regardless of whether the container is changed to a ferromagnetic material container or a paramagnetic material container, thereby driving the inverter circuit at an appropriate switching frequency based on the material of the container.

In addition to the above-described effects, specific effects of the present disclosure will be described together while describing specific matters for implementing the present disclosure.

### BRIEF DESCRIPTION OF DRAWINGS

FIG. 1 is an exploded perspective view illustrating an exploded state of a cooktop in a home appliance according to an embodiment of the present disclosure.
FIG. 2 is a plan view of the cooktop illustrated in FIG. 1 and a view illustrating a configuration of a PCB pattern coil assembly.
FIG. 3 is a diagram illustrating an inverter circuit and a block diagram of a home appliance according to an embodiment of the present disclosure.
FIG. 4 is a diagram illustrating a pulse generation circuit of FIG. 3.
FIG. 5 is a waveform diagram illustrating an operation of the home appliance of FIG. 3.
FIG. 6 is an example diagram of calculating a phase difference using a switching frequency count value.
FIG. 7 is a diagram illustrating an inverter circuit and a load circuit in a home appliance according to an embodiment of the present disclosure.

### DETAILED DESCRIPTIONS

The above-described purposes, features, and advantages will be described in detail with reference to the accompanying drawings, and accordingly, a person having ordinary skill in the art to which the present disclosure pertains will be able to easily implement the technical idea of the present disclosure. In the description of the present disclosure, when it is determined that a detailed description of a known technology related to the present disclosure may unnecessarily obscure the gist of the present disclosure, the detailed description will be omitted. Hereinafter, preferred embodiments according to the present disclosure will be described in detail with reference to the accompanying drawings. In the drawings, the same reference numerals are used to indicate the same or similar components.

Although the first, second, and the like are used to describe various components, it is obvious that these components are not limited by these terms. These terms are used to distinguish only one component from another component. Unless otherwise stated, the first component may be the second component.

The present disclosure is not limited to the embodiments disclosed below, but various changes may be applied thereto and the present disclosure may be implemented in various different forms. However, the present embodiment is provided so that the present disclosure is complete and the scope of the present disclosure is fully informed to those skilled in the art. Therefore, the present disclosure is not limited to the embodiments disclosed below, but it should be understood that a configuration of one embodiment and a configuration of another embodiment are substituted with each other or are added to each other, and all changes, equivalents, and substitutes included in the technical spirit and scope of the present disclosure are included in the present disclosure.

The accompanying drawings are only set forth for easy understanding of the embodiments disclosed in the present disclosure, and the technical spirit disclosed in the present disclosure is not limited by the accompanying drawings, and it should be understood that all changes, equivalents, and substitutes included in the spirit and technical scope of the present disclosure are included in the present disclosure. In the drawings, the components may be expressed to be larger or smaller in size or thickness in consideration of convenience of understanding, etc. However, the scope of the present disclosure should not be limited thereto.

The terms used herein are used only to describe specific embodiments or embodiments, and are not intended to limit the present disclosure. As used herein, the singular constitutes "a" and "an" are intended to include the plural constitutes as well, unless the context clearly indicates otherwise In the present disclosure, terms such as "include" and "comprise" are intended to designate that a feature, a number, a step, an operation, a component, a part, or a combination thereof as described in the present disclosure exist. That is, it should be understood that in the present disclosure, the terms such as "include" and "comprise" do not exclude the presence or addition of one or more other features, numbers, steps, operations, components, parts, or combinations thereof.

Terms including ordinals, such as first, second, etc., may be used to describe various components, but the components are not limited by the terms. The terms are used only for the purpose of distinguishing one component from another component.

When it is mentioned that one component is "connected" or "coupled" to another component, it should be understood that one component may be directly connected or coupled to another component, or still another component may be present therebetween. On the other hand, when it is mentioned that one component is "directly connected" or "directly coupled" to another component, it should be understood that still another component is absent therebetween.

When one component is referred to as "being disposed on top of' or "being disposed under" another component, it should be understood that one component may be directly disposed on top of or under another component or still another component may be present therebetween.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

For example, embodiments in which a heating coil assembly is used in a cooking appliance are described in the present disclosure. However, in some further embodiments, the heating coil assembly may be applied to other home appliances that require induction heating.

For example, the heating coil assembly may be mounted on a washing machine to heat a water tank, a drum, or a washing tub inside the washing machine or to heat washing water.

In another example, the heating coil assembly may be mounted on a water purifier and used to heat a hot water pipe or a water tank.

In still another example, the heating coil assembly may be mounted on a laundry dryer or a laundry care apparatus and used to heat air for drying the laundry.

In still yet another example, the heating coil assembly may be mounted on an electric port or a rice cooker and used to heat a liquid or food therein.

### [Overall Structure of Induction Heating Cooktop]

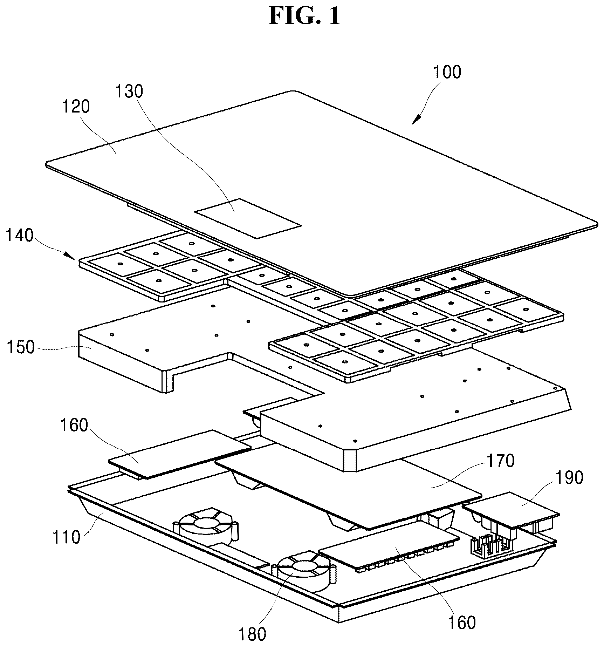

FIG. 1 is an exploded perspective view illustrating an exploded state of an induction heating cooktop 100 in a home appliance according to an embodiment of the present disclosure.

The home appliance according to an embodiment of the present disclosure may be an oven range type home appliance in which the cooktop 100 is disposed in an upper area and an oven is disposed in a lower area. The present disclosure is not limited thereto, and the home appliance according to an embodiment of the present disclosure may be embodied as a home appliance in which the cooktop 100 is provided alone.

Referring to FIG. 1, the home appliance according to an embodiment of the present disclosure includes the induction heating cooktop 100. The induction heating cooktop 100 may include a casing 110 and a top plate 120.

According to the present embodiment, an exterior of the cooktop 100 may be defined by the casing 110 and the top plate 120. The casing 110 may be disposed under the top plate 120, and may constitute a front surface, a rear surface, a side surface, and a bottom surface of the cooktop 100. The top plate 120 may be disposed at a top of the cooktop 100 and may constitute an outer appearance of an upper surface of the cooktop 100. The top plate 120 may be made of ceramic glass for mounting a cooking container thereon.

An accommodation space may be formed inside the casing 110. The accommodation space formed inside the casing 110 may be opened upwardly. In an example, the casing 110 may be formed in a hexahedral shape with an open upper side. In the accommodation space surrounded with the top plate 120 and the casing 110, various internal components constituting the cooktop 100 may be accommodated.

In addition, a PCB pattern coil assembly 140 may be disposed under the top plate 120 in the cooktop 100. In the PCB pattern coil assembly 140, at least one heating coil for heating the cooking container via induction heating and at least one sensing coil for sensing the cooking container may be integrally formed with each other.

For example, the PCB pattern coil assembly 140 may include a plurality of PCB pattern coil assemblies according to a size of the top plate 120 of the cooktop 100. For example, when the top plate 120 is divided into three areas including a left area, a central area, and a right area, three PCB pattern coil assemblies 140 may be respectively disposed under the corresponding areas. The PCB pattern coil assemblies 140 may be formed in different sizes to be suitable for the sizes of the left area, the central area, and the right area, respectively. Each of the PCB pattern coil assemblies 140 corresponding to each area may independently operate.

In the PCB pattern coil assembly 140, the heating coil for induction heating, the sensing coil for sensing the container, a temperature sensor for sensing a temperature, a terminal for connection with other components, etc. may be integrally formed with each other. The PCB pattern coil assembly 140 may be divided into a plurality of unit blocks. In an example, one heating coil may be disposed in one unit block. In an example, at least two sensing coils may be disposed in one unit block. In an example, two sensing coils may be disposed between adjacent unit blocks and across the two adjacent unit blocks.

In addition, in the cooktop 100, a supporter 150 may be disposed under the PCB pattern coil assembly 140. The supporter 150 may constitute a skeleton inside the cooktop 100 so as to support various internal components constituting the cooktop 100. In an example, the supporter 150 may be formed in a hexahedral shape with an open lower side. For example, the supporter 150 may be formed in a shape substantially identical with a shape obtained by turning the casing 110 upside down, and may be formed to have a slightly smaller size than that of the casing 110.

According to the present embodiment, the accommodation space may be formed inside the supporter 150, and may be formed as a space surrounded by the bottom portion of the casing 110 and the supporter 150. Various internal components constituting the cooktop 100 may be accommodated in the supporter 150.

For example, a resonant PCB assembly 160 in which capacitors used for resonance or oscillation are mounted, an inverter PCB assembly 170 in which a switching element for applying a current to the heating coil for induction heating, etc. are mounted, a fan 180 for cooling down the internal components, an EMI filter 190 for filtering and blocking various noises mixed with each other on electrical power, and a control PCB assembly in which a controller for controlling the overall operation of the cooktop 100 and circuits for sensing the cooking container are mounted may be accommodated in the supporter 190.

According to the present embodiment, the supporter 150 may also provide a base function for the PCB pattern coil assembly 140. More specifically, a ferrite core may be installed on an upper surface of the supporter 150, the PCB pattern coil assembly 140 may be installed on top of the ferrite core, and the top plate 120 may be installed on top of the PCB pattern coil assembly 140.

In addition, the cooktop 100 may include a control panel 130. The control panel 130 may be disposed on one area of an upper surface of the top plate 120. The control panel 130 may include a UI (user interface) including an adjustment icon for adjusting an operation of the cooktop 100 in a touch manner and a display for displaying an operation state of the cooktop 100.

### [PCB Pattern Coil Assembly]

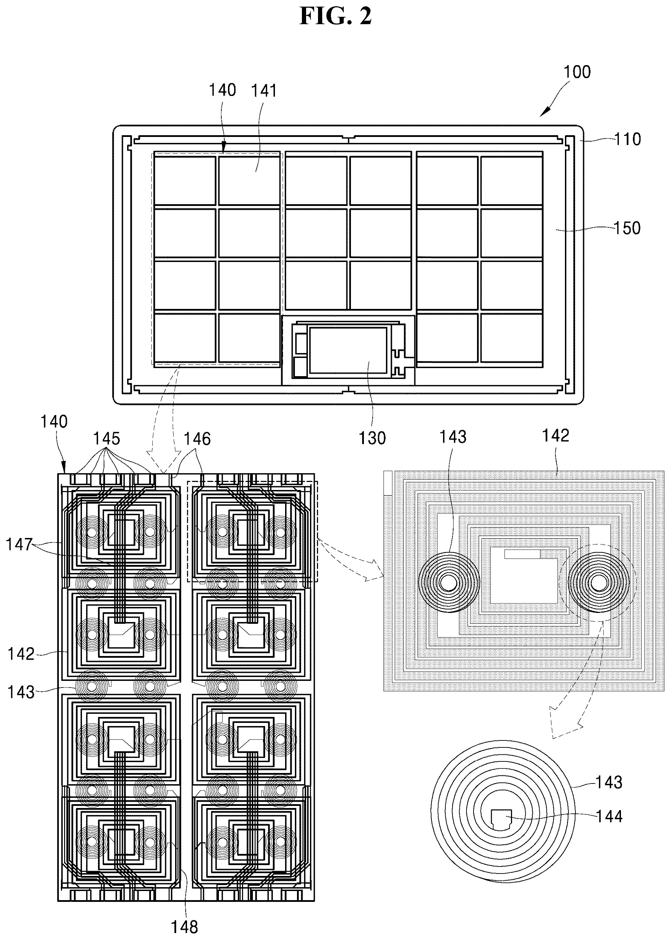

FIG. 2 is a plan view illustrating the cooktop 100 illustrated in FIG. 1 and a configuration of the PCB pattern coil assembly 140.

Referring to FIG. 2, the cooktop 100 may include the casing 110, the supporter 150, and the PCB pattern coil assembly 140. The PCB pattern coil assembly 140 includes the heating coil 142 for induction heating of the cooktop 100 and the sensing coil 143 for sensing the cooking container, and may be disposed in the accommodation space inside the cooktop 100.

The supporter 150 may be disposed on top of the casing 110, the PCB pattern coil assembly 140 may be disposed on top of the supporter 150, and the top plate 120 may be disposed on top of the PCB pattern coil assembly 140.

The PCB pattern coil assembly 140 may include a plurality of PCB pattern coil assemblies according to the size and shape of the cooktop 100. In the present embodiment, it is illustrated that the cooktop 100 is divided into the left area, the central area, and the right area, and includes three PCB pattern coil assemblies 140 corresponding thereto. Each of the PCB pattern coil assemblies 140 may include a plurality of heating coils 142 and a plurality of sensing coils 143.

Each of the PCB pattern coil assemblies 140 may be divided into a plurality of unit blocks 141. The plurality of unit blocks 141 may be arranged in a matrix form. For example, at least one heating coil 142 may be disposed in one unit block 141. For example, at least two sensing coils 143 may be disposed in one unit block 141. In addition, at least two sensing coils 143 may be disposed between adjacent two unit blocks 141 and across the adjacent two unit blocks 141.

Each of the heating coil 142 and the sensing coil 143 formed in the PCB pattern coil assembly 140 may be disposed in a pattern form on a board. In an example, the heating coil 142 may be formed in a polygonal, for example, a square, a rectangular, or a hexagonal pattern. Alternatively, the heating coil 142 may be formed in an annular pattern. For example, the sensing coil 143 may be formed in a circular pattern. Alternatively, the sensing coil 143 may be formed in a circular, square, rectangular, or hexagonal pattern.

In addition, at least one heating coil terminal 145, at least one sensing coil terminal 146, at least one heating coil wiring 147, at least one sensing coil wiring 148, and at least one via may be formed in the PCB pattern coil assembly 140. The heating coil terminal 145 is electrically connected to the heating coil 142 via the heating coil wiring 147, and is electrically connected to the resonant PCB assembly 160 and the inverter PCB assembly 170. The sensing coil terminal 146 is electrically connected to the sensing coil 143 via the sensing coil wiring 148, and is electrically connected to the resonant PCB assembly 160 and the control PCB assembly.

As described above, not only the heating coil 142 but also the sensing coil 143 may be formed in the unit block 141 of the PCB pattern coil assembly 140. In the unit block 141, a plurality of sensing coils 143 are arranged along a front-rear direction, and a plurality of sensing coils 143 are also arranged in a lateral direction.

The PCB pattern coil assembly 140 may include a PCB (hereinafter, referred to as a "heating coil PCB") on which the heating coil 142 is patterned and a PCB (hereinafter, referred to as a "sensing coil PCB") on which the sensing coil 143 is patterned. The PCB pattern coil assembly 140 may be formed in a form in which the heating coil PCB and the sensing coil PCB are stacked in an up-down direction. In one example, the heating coil PCB may be formed in a form in which 10 to 12 layers are stacked, and the heating coils 142 of the layers may be electrically connected to each other via the via. In one example, the sensing coil PCB may be formed in a form in which two layers are stacked, and the sensing coils 143 of the layers may be electrically connected to each other via the via.

In addition, at least one of the heating coil PCB and the sensing coil PCB may be provided in a form in which the coil is patterned on each of both opposite surfaces of the board. In the present embodiment, it is illustrated that the heating coil 142 is patterned on each of both opposing surfaces of the heating coil PCB, and the sensing coil 143 is patterned on each of both opposing surfaces of the sensing coil PCB.

Each of the sensing coils 143 may be disposed to overlap an area where each of the heating coils 142 is formed, as shown in FIG. 2. In addition, each of the sensing coils 143 may be disposed to overlap an area between two adjacent areas where the two heating coils 142 are formed, respectively.

In the present embodiment, it is illustrated that two sensing coils 143 are disposed in the area where each heating coil 142 is formed, and two sensing coils 143 are disposed between the two heating coils 142 adjacent to each other in the front-rear direction. In addition, a temperature sensor 144 may be provided in the PCB pattern coil assembly 140. In one example, the temperature sensor 144 may be disposed in a center portion of an area of each sensing coil 143.

In an example, the PCB pattern coil assembly 140 may be provided in a form in which the heating coil 142, the sensing coil 143, and the temperature sensor 144 are integrally formed with each other. For example, the PCB pattern coil assembly 140 may be formed in a form in which the heating coil PCB having the heating coil 142 and the sensing coil PCB having the sensing coil 143 and the temperature sensor 144 are stacked. The PCB pattern coil assembly 140 may be provided in a form including one or more pattern coil PCBs.

As described above, the PCB pattern coil assembly 140 has a structure in which a plurality of heating coils 142 for induction heating and a plurality of sensing coils 143 for sensing the cooking container mounted on the ceramic glass are integrally formed with each other using the patterns printed on the PCB. The number of heating coils 142 and sensing coils 143 may be determined based on the size of the cooktop 100.

For example, the integrated PCB pattern coil assembly 140 may include heating coil patterns arranged in 10 layers, sensing coil patterns arranged in two layers, and an electrical insulating material disposed between each heating coil pattern and each sensing coil pattern adjacent to each other to electrically insulate each heating coil pattern and each sensing coil pattern from each other. The electrical insulating material may be formed by curing a prepreg made of a thermosetting resin generally used to form a printed circuit board and glass fibers. For example, the thermosetting resin may be preferably an epoxy resin-based thermosetting resin. Specifically, the epoxy resin-based thermosetting resin may be FR-4.

As described above, the electrical insulating material made of the prepreg may be disposed between adjacent ones of the heating coil patterns respectively disposed in the multiple layers to electrically insulate the adjacent ones from each other, and may be disposed between the adjacent sensing coil patterns to electrically insulate adjacent ones of the sensing coil patterns respectively disposed in the multiple layers from each other. In addition, the electrical insulating material may be constructed to fill an area in which the patterns such as the heating coil pattern and the sensing coil pattern are absent, and may serve to form a layered structure of an individual layer.

Therefore, based on the heating coil pattern and the sensing coil pattern, the PCB pattern coil assembly 140 may have the multilayer structure having a total of 12 layers from a first layer as the uppermost layer to a twelfth layer as the lowermost layer along the up-down direction.

As described above, the heating coil pattern and the sensing coil pattern according to the embodiment of the present disclosure are formed into then integrated PCB pattern coil assembly composed of a plurality of layers, thereby contributing to the simplification of processes such as masking, printing, and etching.

### [Configuration of Home Appliance for Power Measurement]

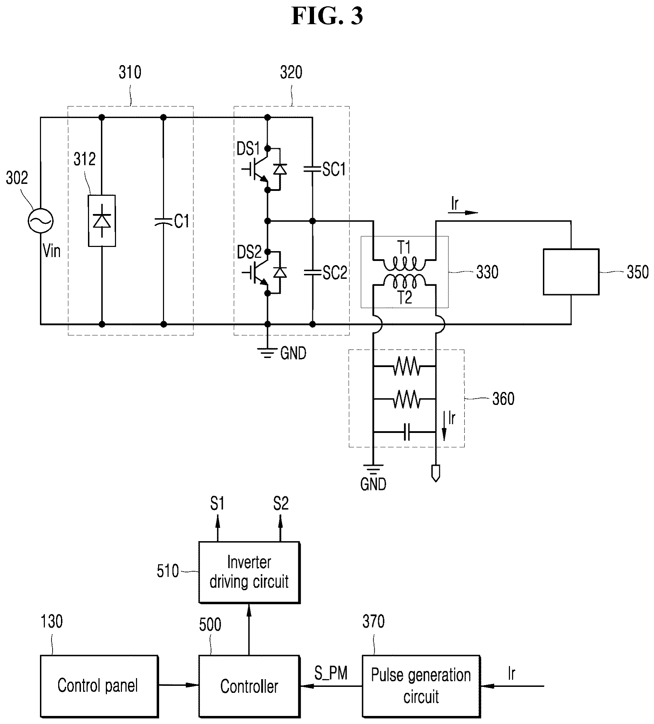

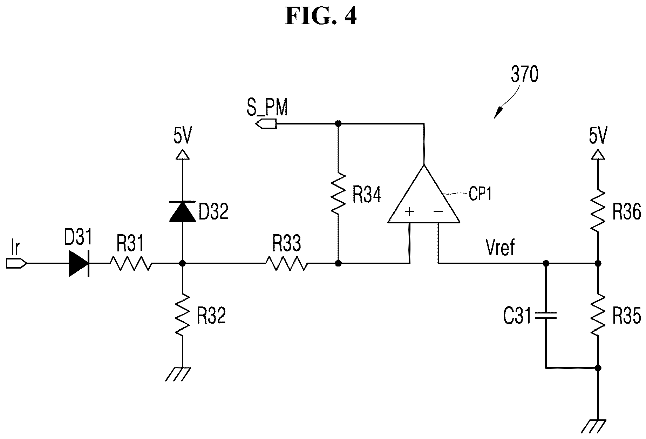

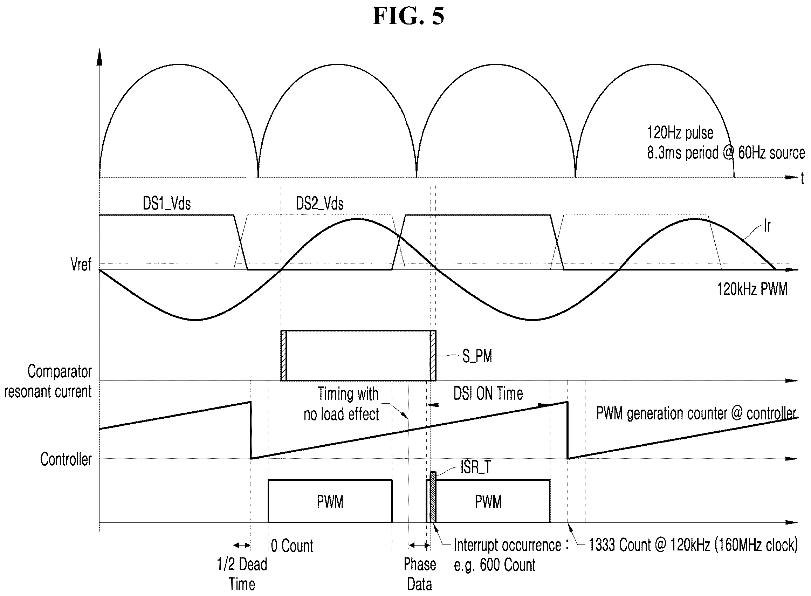

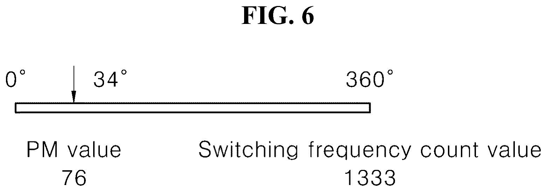

FIG. 3 is a diagram illustrating an inverter circuit and a block diagram of a home appliance according to an embodiment. FIG. 4 is a diagram illustrating a pulse generation circuit of FIG. 3. FIG. 5 is a waveform diagram illustrating an operation of the home appliance of FIG. 3. FIG. 6 is an example diagram for calculating a phase difference using a switching frequency count value.

In an induction heating (IH) cooking appliance, an output load becomes an induction container due to the characteristics of the application thereof. The induction container is largely classified into a ferromagnetic material based container and a paramagnetic material-based container which have different characteristics. The cooking appliance has the container at a position of the heating coil and measures input power in an operation thereof and adjusts the output transmitted to the load via the inverter circuit based on the measurement result. The driving current transmitted to the load may be adjusted to be different from each other for the ferromagnetic material-based container and the paramagnetic material-based container.

For example, the home appliance may drive the heating coil 142 with the power controlled such that the power for the ferromagnetic container having strong magnetism has a lower strength than that of the power for the paramagnetic container having weak magnetism. The strength of the power based on the container material or the strength of the power according to the variation value of the equivalent resistance of the sensing coil may be stored in the memory, and the controller 500 may determine the material of the container and drive the heating coil 142 with the strength of the power corresponding to the determined material of the container.

The type of the magnetic material is identified based on whether specific permeability is generated. The specific permeability of the material is calculated as the permeability of the material/the permeability of the vacuum, and indicates how many times the permeability of the material is compared to the vacuum permeability.

In the present disclosure, the ferromagnetic material may be defined as a material having the specific permeability much larger than 1. The ferromagnetic material has strong magnetic properties, and the magnetic properties of the ferromagnetic material may change according to the temperature and the external magnetic field. The ferromagnetic material may maintain the magnetic properties even when the external magnetic field is removed. Iron, cobalt, nickel, etc. are typical ferromagnetic materials.

In the present disclosure, the paramagnetic material may be defined as a material having the specific permeability equal to or slightly larger than 1. The paramagnetic material has paramagnetic properties and has magnetic properties easily changing depending on the external magnetic field or temperature. Aluminum, platinum, platinum, etc. are representative paramagnetic materials.

Therefore, in order to accurately drive the heating coil with a target power suitable for the material of the container, it is necessary to accurately measure the output power of the load in the home appliance.

A home appliance according to an embodiment of the present disclosure may be capable of precisely measuring an output of a harmonic-driven inverter based on a resonance parameter including at least one of a resonant current, a resonant voltage, and a phase.

Referring to FIG. 3, the home appliance according to an embodiment includes a rectifier circuit 310, an inverter circuit 320, a current sensing circuit 330 and 360, a load circuit 350, a pulse generation circuit 370, a control panel 130, a controller 500, and an inverter driving circuit 510.

The rectifier circuit 310 may include a plurality of diode elements 312 and a DC link capacitor C1. The diode elements 312 rectify input voltage Vin supplied from a power supply 302 to output a voltage having a pulsating waveform. The DC link capacitor C1 smooths the voltage output from the diode elements 312 to output a DC link voltage

The inverter circuit 320 supplies a resonant current Ir to the heating coil in the load circuit 350 based on the DC link voltage supplied from the DC link capacitor C1. The inverter circuit 320 may include a plurality of switching elements, for example, a first switching element DS1 and a second switching element DS2. The first switching element DS1 and the second switching element DS2 are connected to each other in series.

The inverter circuit 320 supplies the resonant current to the load circuit 350 via the switching operation of the first switching element DS1 and the second switching element DS2. The resonance frequency of the resonant current is determined based on the inductance value of the heating coil and the capacitance value of the resonant capacitor of the load circuit 350.

The first switching element DS1 and the second switching element DS2 may be alternately turned on and off based on a first switching signal S1 and a second switching signal S2 supplied from the inverter driving circuit 510, respectively. The first switching element DS1 and the second switching element DS2 being alternately turned-on and turned-off may be referred to as the switching operation of the first switching element DS1 and the second switching element DS2.

The resonant current Ir is generated via the switching operation of the first switching element DS1 and the second switching element DS2. When the resonant current Ir is supplied to the heating coil, the eddy current flows in the container disposed on top of the heating coil such that the container is heated.

The inverter circuit 320 further includes a first snubber capacitor CS1 and a second snubber capacitor CS2. The first snubber capacitor CS1 is connected in parallel to the first switching element DS1. The second snubber capacitor CS2 is connected in parallel with the second switching element SW2. The first snubber capacitor CS1 and the second snubber capacitor CS2 are connected in series to each other.

Each of the first snubber capacitor CS1 and the second snubber capacitor CS2 serve to reduce power loss due to hard switching occurring when each of the first switching element DS1 and the second switching element DS2 is turned off.

The control panel 130 may be provided with a user interface including an adjustment icon for adjusting the operation of the home appliance in a touch manner and a display for displaying the operation state of the home appliance. The user may input a target heating intensity through the control panel 130.

The load circuit 350 includes at least one heating coil, at least one resonant capacitor, and at least one relay. In this regard, the at least one heating coil, the at least one resonant capacitor, and the at least one relay may be selectively connected in series or in parallel with each other.

The current sensing circuit includes a current converter 330 and a stabilization circuit 360. The current converter 330 may include a primary winding T1 and a secondary winding T2. The primary winding T1 may be connected to and disposed between the inverter circuit 320 and the heating coil, and the secondary winding T2 may be connected to the stabilization circuit 360. Each of the number of coil windings of the primary winding T1 and the number of coil windings of the secondary winding T2 is inversely proportional to a magnitudes of a current flowing through each of the primary winding T1 and the secondary winding T2. The number of coil windings of the secondary winding T2 may be greater than the number of coil windings of the primary winding T1. Accordingly, the magnitude of the current flowing through the secondary winding T 2 may be smaller than the magnitude of the current flowing through the primary winding T 1.

A current having a magnitude smaller than that of the resonant current Ir flowing through the primary winding T1 may flow through the secondary winding T2. A current flowing through the secondary winding T2, that is, a resonant current whose a magnitude has been changed may be supplied to the pulse generation circuit 370 via the stabilization circuit 360.

The stabilization circuit 360 is connected in parallel to the current converter 330. The stabilization circuit 360 includes at least one resistor and a stabilization capacitor connected in parallel to the current converter 330. At least one resistor has one end connected to a ground voltage terminal and the other end connected to an output terminal through which the resonant current Ir is output. The stabilization capacitor is connected in parallel with at least one resistor and has one end connected to the ground voltage terminal, and the other end connected to the output terminal. The output terminal of the stabilization circuit is connected to the pulse generation circuit 370.

Referring to FIG. 4, the pulse generation circuit 370 generates a pulse signal S_PM based on the resonant current Ir output from the current sensing circuit and supplies the pulse signal S_PM to the controller 500. The pulse signal S_PM is used to measure a phase difference between the resonant current Ir and a switching voltage DS2_Vds of the second switching element DS2 of the inverter circuit 320 in the controller 500.

The pulse generation circuit 370 includes a first diode D31 connected to the output terminal of the current sensing circuit, a first resistor D31 connected in series to the first diode R31, a second diode D32 having one end connected to a power voltage 5V terminal and the other end connected to the first resistor R31, and a second resistor R32 having one end connected to the first resistor R31 and the other end connected to the ground voltage terminal.

In addition, the pulse generation circuit 370 includes a third resistor R33 connected in series to the first resistor R31, a comparator CP1 having a first input terminal (+) connected to the third resistor R33 and a second input terminal (-) connected to a reference voltage Vref terminal, and a fourth resistor R34 connected to and disposed between the output terminal of the comparator CP1 and the first input terminal (+) thereof.

In addition, the pulse generation circuit 370 further includes first and second reference resistors R36 and R35 connected in series to each other and disposed between and connected to the power voltage 5V terminal and the ground voltage terminal, and a reference capacitor 31 connected to and disposed between a node between the first and second reference resistors R36 and R35 and the ground voltage terminal. The node between the first and second reference resistors R36 and R35 is a reference voltage terminal and is connected to the second input terminal (-) of the comparator CP1. Thus, the pulse generation circuit 370 generates the pulse signal using one comparator. This may reduce a cumulative error occurring in the comparator.

Referring to FIGS. 3 to 6, the controller 500 controls the inverter driving circuit 510 to drive the load circuit 350 at a target intensity received from the control panel 130. The controller 500 controls switching of switching elements of the inverter driving circuit 510.

The controller 500 measures a phase margin based on the pulse signal S_PM output from the pulse generation circuit 370 and a switching frequency count value, and measures a phase difference based on the phase margin.

The controller 500 defines an internal PWM count start time as a phase margin start time, defines a falling edge interrupt of the pulse signal as a phase margin end time, and calculates the phase difference based on the phase margin start and end times. For example, the phase margin may be calculated based on an Equation: "phase margin PM=(switch frequency count value/2) + dead time - count value at interrupt occurrence time point ". For example, the phase margin may be calculated as PM=1333/2+60-600=76. The phase margin PM is multiplied by 360 degrees and the multiplication result is divided by the switching frequency, such that the phase is calculated. In this regard, the phase represents the phase difference between the resonant current and the switching voltage.

The controller 500 calculates the resonant voltage by multiplying the input voltage Vin by an on-time duty of the switching element. The controller 500 may calculate the resonant current by applying a linear regression equation to the value measured by the current sensing circuit and may measure a resonant current value output to the inverter circuit 320 based on the calculated resonant current.

The controller 500 measures the output power of the load circuit based on the resonant voltage VINPUT x Duty, the average resonant current I_{L_avg}, and the phase difference Θ. For example, the output power is calculated as Power = V_{INPUT} x Duty x I_{L.avg} x cosΘ. The controller 500 may calculate the output power at least once every system control period, for example, every 10ms or 8.3ms.

The controller 500 controls the switching operation of the inverter circuit by adjusting at least one of the duty ratio and the switching frequency of the inverter circuit 320 according to the output power of the load circuit.

The controller 500 may control at least one relay in the load circuit 350 such that at least one heating coil corresponding to the position of the container is activated according to the position of the container.

Since the controller 500 measures the phase difference between the resonant current and the switching voltage of the inverter circuit using only the resonant current output from the inverter circuit 320, the output of the harmonic-driven inverter may be precisely measured.

As described above, the home appliance of the present disclosure measures the output power of the load by detecting only the resonant current in the hardware manner and measuring the resonant voltage and the phase in the software manner, thereby accurately measuring the power of the load regardless of the change of the heating coil or the change of the inverter PCB pattern.

In addition, the home appliance of the present disclosure adjusts at least one of the duty ratio and the switching frequency of the inverter circuit based on the measured power of the load. Thus, the reliability of the switch operation of the inverter circuit may be improved.

In addition, in the present disclosure, the home appliance of the present disclosure measures the power of the load using the resonant current obtained via the current conversion of the driving current to be supplied from the inverter circuit to the load, thereby preventing the influence of the noise of the resistance of the ground voltage terminal.

In addition, the home appliance of the present disclosure may reduce the influence of noise compared to the home appliance using the existing scheme of measuring the input current using the shunt resistor, thereby improving the reliability of high-frequency operation of the switching elements of the inverter circuit.

In addition, according to the present disclosure, the power of the load may be accurately measured regardless of whether the container is changed to the ferromagnetic material container or the paramagnetic material container. Thus, the inverter circuit may be driven at an appropriate switching frequency according to the material of the container.

### [Inverter Circuit and Load Circuit]

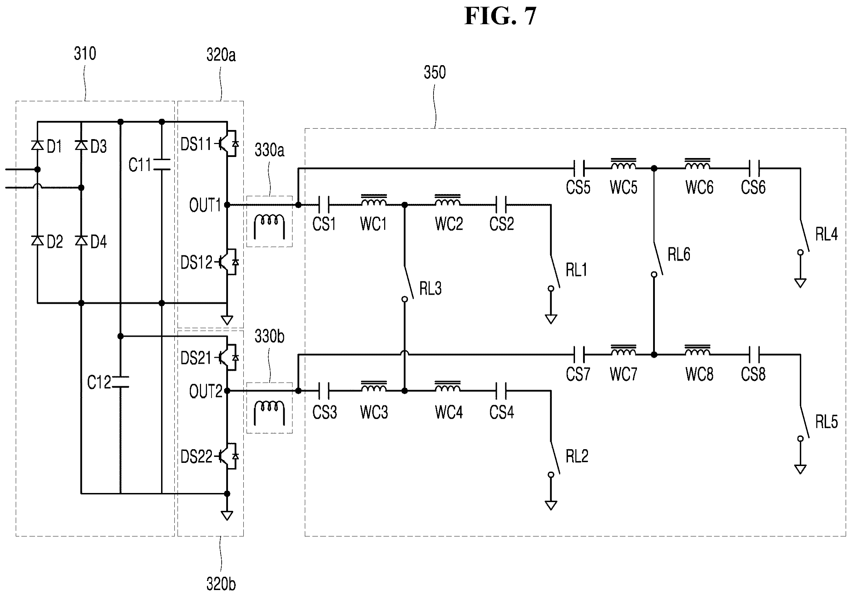

FIG. 7 is a diagram illustrating the rectifier circuit 310, a first inverter circuit 320a, a second inverter circuit 320b, and the load circuit 350 in a home appliance according to an embodiment of the present disclosure.

The rectifier circuit 310 converts an AC voltage having the magnitude and polarity (positive voltage or negative voltage) changing over time into a DC voltage having a constant magnitude and polarity, and converts an AC current having the magnitude and direction (positive current or negative current) changing over time into a DC current having a constant magnitude.

The rectifier circuit 310 may include a bridge diode. Specifically, the rectifier circuit 310 includes four diodes D1, D2, D3, and D4. The diodes D1, D2, D3, and D4 constitute two diode pairs D1 and D2, and D3, and D4, the two diodes of each pair being connected in series to each other, and the two diode pairs D1 and D2, D3, and D4 are connected in parallel with each other. The bridge diode converts an AC voltage of which the polarity changes over time into a positive voltage having a constant polarity over time, and converts an AC current of which the direction changes over time into a positive current having a constant direction over time.

In addition, the rectifier circuit 310 includes a DC connection capacitor C1. The DC connection capacitor C1 converts a positive voltage whose magnitude changes over time into a DC voltage having a constant magnitude over time.

The inverter circuit 320a and 320b include the first inverter circuit 320a and the second inverter circuit 320b. The first inverter circuit 320a supplies a first resonant current to the load circuit 350 through a first output terminal OUT1 according to the switching operation of the switching elements DS11 and DS12. The second inverter circuit 320b supplies a second resonant current to the load circuit 350 through a second output terminal OUT2 according to the switching operation of the switching elements DS21 and DS22.

The first current converter 330a converts the first resonant current supplied from the first inverter circuit 320a to the load circuit 350 so as to have a predetermined ratio of the intensity of the first resonant current. The converted first resonant current is provided to the pulse generation circuit. The second current converter 330b converts the second resonant current supplied from the second inverter circuit 320a to the load circuit 350 so as to have a predetermined ratio of the intensity of the second resonant current. The converted second resonant current is provided to the pulse generation circuit.

The load circuit 350 may include at least one resonant capacitor CS1, CS2, CS3, CS4, CS5, CS6, CS7, and CS8, at least one heating coil WC1, WC2, WC3, WC4, WC5, WC6, WC7, and WC8, and at least one relay RL1, RL2, RL3, RL4, RL4, and RL6 that are connected in series or in parallel with each other.

The resonant capacitor CS1, CS2, CS3, CS4, CS5, CS6, CS7, and CS8 may be used to filter a DC component from the driving current. The heating coil WC1, WC2, WC3, WC4, WC5, WC6, WC7, and WC8 may be used to heat the cooking container using electromagnetic induction. The relay RL1, RL2, RL3, RL4, RL4, and RL6 may be used to selectively connect the heating coils WC1, WC2, WC3, WC4, WC5, WC6, WC7, and WC8 in series or in parallel with each other. In addition, the heating coil WC1, WC2, WC3, WC4, WC5, WC6, WC7, and WC8 and the capacitor CS1, CS2, CS3, CS4, CS5, CS6, CS7, and CS8 may be used to determine the resonance frequency of the driving current.

The load circuit 350 may include a first resonant capacitor CS1 configured to transmit the first resonant current supplied from the first inverter circuit 320a, a first heating coil WC1 connected in series to the first resonant capacitor CS1, a second heating coil WC2 connected in series to the first heating coil WC1, a second resonant capacitor CS2 connected in series to the second heating coil WC2, and a first relay RL1 configured to connect or disconnect the second resonant capacitor CS2 and the ground voltage terminal to or from each other.

In addition, the load circuit 350 may further include a third resonant capacitor CS3 configured to transmit the second resonant current supplied from the second inverter circuit 320b, a third heating coil WC3 connected in series to the third resonant capacitor CS3, a fourth heating coil WC4 connected in series to the third heating coil WC3, a fourth resonant capacitor CS4 connected in series to the fourth heating coil WC4, and a second relay RL2 configured to connect or disconnect the fourth resonant capacitor CS4 and the ground voltage terminal to or from each other.

In addition, the load circuit 350 may further include a third relay RL3 for switching a node between the first heating coil WC1 and the second heating coil WC2 and a node between the third heating coil WC3 and the fourth heating coil WC4 to or from each other.

In addition, the load circuit 350 may further include a fifth resonant capacitor CS5 configured to transmit the first resonant current supplied from the first inverter circuit 320a, a fifth heating coil WC5 connected in series to the fifth resonant capacitor CS5, a sixth heating coil WC6 connected in series to the fifth heating coil WC5, a sixth resonant capacitor CS6 connected in series to the sixth heating coil WC6, and a fourth relay RL4 configured to connect or disconnect the sixth resonant capacitor CS6 and the ground voltage terminal.

In addition, the load circuit 350 may further include a seventh resonant capacitor CS7 configured to transmit the second resonant current supplied from the second inverter circuit 320b, a seventh heating coil WC7 connected in series to the seventh resonant capacitor WC7, an eighth heating coil WC8 connected in series to the seventh heating coil CS7, an eighth resonant capacitor CS8 connected in series to the eighth heating coil WC7, and a fifth relay RL5 configured to connect or disconnect the eighth resonant capacitor CS8 and the ground voltage terminal to or from each other.

In addition, the load circuit 350 may further include a sixth relay RL6 for connecting or disconnecting a node between the fifth heating coil WC5 and the sixth heating coil WC6 and a node between the seventh heating coil WC7 and the eighth heating coil WC8 to or from each other.

A home appliance according to an embodiment of the present disclosure includes: a load circuit including at least one heating coil; an inverter circuit including switching elements and configured to supply a current to the load circuit according to switching operation of the switching elements; a current sensing circuit configured to sense a resonant current output from the inverter circuit; a pulse generation circuit configured to generate a pulse signal based on the resonant current, wherein the pulse signal may be used to calculate a phase difference between the resonant current and a switching voltage of the inverter circuit; and a controller configured to calculate the phase difference based on the pulse signal, and to measure an output power of the load circuit based on the phase difference.

In accordance with one embodiment, the current sensing circuit may include: a current converter configured to convert the resonant current output from the inverter circuit so as to have a predetermined ratio of an intensity of the resonant current; and a stabilization circuit configured to stabilize and output the converted resonant current.

In accordance with one embodiment, the stabilization circuit may include: at least one resistor connected in parallel to the current converter, and having one end connected to a ground voltage terminal and the other end connected to an output terminal; and a stabilization capacitor connected in parallel with the at least one resistor, wherein one end of the stabilization capacitor may be connected to the ground voltage terminal and the other end of the stabilization capacitor may be connected to the output terminal.

In accordance with one embodiment, the pulse generation circuit may include: a first diode connected to an output terminal of the current sensing circuit; a first resistor connected in series to the first diode; a second diode having one end connected to a power voltage terminal and the other end connected to the first resistor; a second resistor having one end connected to the first resistor and the other end connected to a ground voltage terminal; a third resistor connected in series to the first resistor; a comparator having a first input terminal connected to the third resistor and a second input terminal connected to a reference voltage terminal; a fourth resistor connected to and disposed between an output terminal of the comparator and the first input terminal.

In accordance with one embodiment, the pulse generation circuit may further include: first and second reference resistors coupled in series to each other and disposed between and connected to the power voltage terminal and the ground voltage terminal; and a reference capacitor connected to and disposed between a node between the first and second reference resistors and the ground voltage terminal, wherein the node between the first and second reference resistors may be the reference voltage terminal and may be connected to the second input terminal of the comparator.

In accordance with one embodiment, the inverter circuit may include: first and second switching elements connected in series to each other and disposed between and connected to a high potential terminal and a low potential terminal; a first snubber capacitor connected in parallel to the first switching element; and a second snubber capacitor connected in parallel to the second switching element.

In accordance with one embodiment, the controller may be configured to: define an internal PWM count start time point as a phase margin start time point; define a falling edge interrupt of the pulse signal as a phase margin end time point; and calculate the phase difference based on the phase margin start and end time points.

In accordance with one embodiment, the controller may be configured to calculate a resonant voltage based on a duty ratio and an input voltage of the inverter circuit.

In accordance with one embodiment, the controller may be configured to measure output power of the load circuit based on the resonant voltage, the resonant current, and the phase difference.

In accordance with one embodiment, the controller may be configured to adjust at least one of a switching frequency and a duty ratio of the inverter circuit according to output power of the load circuit to control the switching operation of the inverter circuit.

In accordance with one embodiment, the at least one heating coil may be formed into an integral multilayer PCB pattern assembly.

In accordance with one embodiment, the inverter circuit may include: a first inverter circuit configured to supply a first resonant current to the load circuit; and a second inverter circuit configured to supply a second resonant current to the load circuit.

In accordance with one embodiment, the current sensing circuit may be configured to individually sense each of the first resonant current and the second resonant current output from each of the first inverter circuit and the second inverter circuit.

In accordance with one embodiment, the pulse generation circuit may be configured to generate a first pulse signal based on the first resonant current, wherein the first pulse signal may be used to measure a first phase difference between the first resonant current and a switching voltage of the first inverter circuit.

In accordance with one embodiment, the pulse generation circuit may be configured to generate a second pulse signal based on the second resonant current, wherein the second pulse signal may be used to measure a second phase difference between the second resonant current and a switching voltage of the second inverter circuit.

In accordance with one embodiment, the controller may be configured to individually measure output power of each of the first inverter circuit and the second inverter circuit, based on at least one of the first pulse signal and the second pulse signal.

Although the present disclosure has been described above with reference to the embodiments illustrated in the drawings, this is merely an example, and those skilled in the art will understand that various modifications and other equivalent embodiments may be derived therefrom. Accordingly, the true technical protection scope of the present disclosure should be determined by the following claims.

## Claims

1. A home appliance comprising:
a load circuit including at least one heating coil;
an inverter circuit including switching elements and configured to supply a current to the load circuit according to switching operation of the switching elements;
a current sensing circuit configured to sense a resonant current output from the inverter circuit;
a pulse generation circuit configured to generate a pulse signal based on the resonant current, wherein the pulse signal is used to calculate a phase difference between the resonant current and a switching voltage of the inverter circuit; and
a controller configured to calculate the phase difference based on the pulse signal, and to measure an output power of the load circuit based on the phase difference.

2. The home appliance of claim 1, wherein the current sensing circuit includes:
a current converter configured to convert the resonant current output from the inverter circuit so as to have a predetermined ratio of an intensity of the resonant current; and
a stabilization circuit configured to stabilize and output the converted resonant current.

3. The home appliance of claim 2, wherein the stabilization circuit includes:
at least one resistor connected in parallel to the current converter, and having one end connected to a ground voltage terminal and the other end connected to an output terminal; and
a stabilization capacitor connected in parallel with the at least one resistor, wherein one end of the stabilization capacitor is connected to the ground voltage terminal and the other end of the stabilization capacitor is connected to the output terminal.

4. The home appliance of claim 1, wherein the pulse generation circuit includes:
a first diode connected to an output terminal of the current sensing circuit;
a first resistor connected in series to the first diode;
a second diode having one end connected to a power voltage terminal and the other end connected to the first resistor;
a second resistor having one end connected to the first resistor and the other end connected to a ground voltage terminal;
a third resistor connected in series to the first resistor;
a comparator having a first input terminal connected to the third resistor and a second input terminal connected to a reference voltage terminal;
a fourth resistor connected to and disposed between an output terminal of the comparator and the first input terminal.

5. The home appliance of claim 4, wherein the pulse generation circuit further includes:
first and second reference resistors coupled in series to each other and disposed between and connected to the power voltage terminal and the ground voltage terminal; and
a reference capacitor connected to and disposed between a node between the first and second reference resistors and the ground voltage terminal,
wherein the node between the first and second reference resistors is the reference voltage terminal and is connected to the second input terminal of the comparator.

6. The home appliance of claim 1, wherein the inverter circuit includes:
first and second switching elements connected in series to each other and disposed between and connected to a high potential terminal and a low potential terminal;
a first snubber capacitor connected in parallel to the first switching element; and
a second snubber capacitor connected in parallel to the second switching element.

7. The home appliance of claim 1, wherein the controller is configured to:
define an internal PWM count start time point as a phase margin start time point;
define a falling edge interrupt of the pulse signal as a phase margin end time point; and
calculate the phase difference based on the phase margin start and end time points.

8. The home appliance of claim 7, wherein the controller is configured to calculate a resonant voltage based on a duty ratio and an input voltage of the inverter circuit.

9. The home appliance of claim 8, wherein the controller is configured to measure output power of the load circuit based on the resonant voltage, the resonant current, and the phase difference.

10. The home appliance of claim 1, wherein the controller is configured to adjust at least one of a switching frequency and a duty ratio of the inverter circuit according to output power of the load circuit to control the switching operation of the inverter circuit.

11. The home appliance of claim 1, wherein the at least one heating coil is formed into an integral multilayer PCB pattern assembly.

12. The home appliance of claim 1, wherein the inverter circuit includes:
a first inverter circuit configured to supply a first resonant current to the load circuit; and
a second inverter circuit configured to supply a second resonant current to the load circuit.

13. The home appliance of claim 12, wherein the current sensing circuit is configured to individually sense each of the first resonant current and the second resonant current output from each of the first inverter circuit and the second inverter circuit.

14. The home appliance of claim 13, wherein the pulse generation circuit is configured to generate a first pulse signal based on the first resonant current, wherein the first pulse signal is used to measure a first phase difference between the first resonant current and a switching voltage of the first inverter circuit,
wherein the pulse generation circuit is configured to generate a second pulse signal based on the second resonant current, wherein the second pulse signal is used to measure a second phase difference between the second resonant current and a switching voltage of the second inverter circuit.

15. The home appliance of claim 14, wherein the controller is configured to individually measure output power of each of the first inverter circuit and the second inverter circuit, based on at least one of the first pulse signal and the second pulse signal.
